# EUROPEAN PATENT APPLICATION

(11) **EP 3 613 495 A1**
(43) Date of publication of application: **26.02.2020**
(21) Application number: 18190602.5
(22) Date of filing: 23.08.2018
(51) Int. Cl.: B01D 65/00, A41D 27/00, B01D 69/06, B01D 69/10, B01D 69/12, B01D 39/00

(54) **POROUS COMPOSITE STRUCTURES WITH TOUCH FASTENER**

(71) Applicant: MMM Innovations BVBA, 2160 Wommelgem (BE)
(72) Inventor: DOYEN, Willy, 2160 Wommelgem (BE)
(74) Representative: DenK iP

(57) **Abstract**

In a first aspect, the present invention relates to a porous composite structure (100), comprising:
a porous substrate (200), furnished with protrusions (230) on a first surface thereof and being free of said protrusions (230) on an opposing second surface thereof; and
a polymer-based layer (300) coating the first and the second surface and penetrating through pores (220) of the porous substrate (200), in such a way that the pores (220) of the porous substrate (200) remain partially open and that the protrusions (230) on the first surface extend out of the polymer-based layer (300).

## Description

### Technical field of the invention

The present invention relates to porous structures and in particular to porous composite structures.

### Background of the invention

In a variety of applications, there is a use for porous structures, e.g. as (semi-)permeable membranes, flow guides, filtration media, etc.

In some applications, e.g. in zero gap electrochemical cells, typically membrane structures are used as porous structure. In these applications, there is no gap between the porous/non-porous membrane structure and the electrodes. This is leading to hot spots, to higher cell voltage or to higher gas impurity. Hence, in some applications, there is a desire to improve the fluid flow through or nearby the porous structure, and/or to improve the chemical reactivity near the porous structure.

Filter assemblies for wastewater filtration or other types of filtration are known. Some filtration assemblies comprise two polymeric permeable membranes on opposite sides of a support, the support having fluid passages therein. By passing the wastewater through the polymeric permeable membrane layers and out of the fluid passages, small particles in the wastewater are filtered out. However, even if the permeable membranes are flushed regularly, a layer of irreversible fouling will inevitably build up on the membrane over time, necessitating their replacement. As this requires the replacement of the entire assembly, this is typically a costly endeavor. One particular example is described in WO2007/036332 showing a filter element consisting of a planar drainage element and a filter membrane precipitated directly onto the drainage element. The drainage element can for example be a polymer space fabric made from a first and a second mesh material.

Similar membrane assemblies for membrane bioreactors are for example described in US7862718B2 / EP1807184B1 and typically face comparable issues. For this concept it is non-trivial to provide the two permeable membranes on opposing sides of the used support with a sufficiently tight attachment, whilst simultaneously ensuring a uniform thickness for both membrane layers.

There is thus still a need in the art for better porous structures which address some or all of the challenges outlined above.

### Summary of the invention

It is an object of the present invention to provide more adapted porous structures. It is a further object of the present invention to provide good methods for making said porous structure, good uses for said porous structures and good products incorporating said porous structures. These objectives are accomplished by structures, methods, uses and products according to the present invention.

It is an advantage of embodiments of the present invention that a porous composite structure can be provided having protrusions on one side of a porous substrate, while being substantially flat (e.g. smooth) on an opposing side.

It is an advantage of embodiments of the present invention that the porous composite structure can be (semi-)porous.

It is an advantage of embodiments of the present invention that a good mass transport and/or low flow resistance across and along the porous composite structure is achieved.

It is an advantage of embodiments of the present invention that a chemical reaction occurring in the direct vicinity of the porous composite structure (e.g. in the pores or near the protrusions) can be higher than in the absence of said porous composite structure. It is a further advantage of embodiments of the present invention that transport of reagents to the reaction sites and products away from the reaction sites can be high.

It is an advantage of embodiments of the present invention that transport of compounds to and from sorptions sites can be high.

It is an advantage of embodiments of the present invention that the porous substrate may have a relatively high porosity. It is a further advantage of embodiments of the present invention that the composite structure as a whole may have a relatively high porosity.

It is an advantage of embodiments of the present invention that the protrusion may be selected between a variety and combinations of different types.

It is an advantage of some embodiments of the present invention that the porous substrate can be flexible. It is a further advantage of embodiments of the present invention that the composite structure as a whole can be flexible. It is yet a further advantage of embodiments of the present invention that the flexible porous composite structure can be easily coiled up into a roll, making it easy to handle (e.g. for post-treatment, storage, transport and use as rolls as such). It is also an advantage that the substrates can be attached to a more rigid porous carrier, so that an overall rigid system is obtained, which is advantageous for particular applications.

It is an advantage of embodiments of the present invention that the porous substrate and the protrusions thereon can form one body, providing a tight connection of the protrusions to the porous substrate and allowing an electrical, ionic and/or thermal conduction in the substrate to extend to the protrusions.

It is an advantage of embodiments of the present invention that the porous substrate and/or the protrusions can be made from a diverse range of materials. It is an advantage that the length of the protrusions can be chosen as function of the application. It is an advantage that protrusions with different lengths can be used within a same application, e.g. protrusions with a first length and protrusions with a second length, e.g. twice the first length, could be present.

It is an advantage of embodiments of the present invention that they can be electrically, ionically and/or thermally conductive.

It is an advantage of embodiments of the present invention that the polymer-based layer can add a diverse range of properties and functionalities (e.g. in terms of physical, chemical, electrochemical and/or biological properties and/or functionalities, including composition, hydrophilicity or hydrophobicity, catalytic/electrocatalytic properties, antimicrobial properties, etc.).

It is an advantage of embodiments of the present invention that the porous composite structure can be provided on its first side with one or more areas in which the protrusions are absent.

It is an advantage of embodiments of the present invention that the porous composite structure can be fabricated in a relatively easy and straightforward fashion.

It is an advantage of embodiments of the present invention that the coating of the polymer layer on to the porous substrate can be well controlled.

It is an advantage of embodiments of the present invention that the porous composite structure can be fabricated in a relatively continuous way. It is a further advantage of embodiments of the present invention that the fabrication can be performed at a relatively high speed and that an optional post-treatment of the porous composite structure can be easily performed. It is yet a further advantage of the present invention that the porous composite structure can be fabricated in an economical fashion.

It is an advantage of embodiments of the present invention that contact with the polymer coating during fabrication can be maximally delayed, allowing for a good (e.g. uniform and non-defectuous) polymer coating to be formed.

It is an advantage of embodiments of the present invention that the protrusions can function as a distance holder. It is a further advantage of embodiments of the present invention that a spacer region comprising the protrusions is then formed which is highly porous. It is yet a further advantage of embodiments of the present invention that this region and the protrusion are highly accessible (e.g. by a fluid).

It is an advantage of embodiments of the present invention that the protrusions can function as one part of a touch fastener. It is a further advantage of embodiments of the present invention that the porous composite structure can be easily attached and/or detached. It is yet a further advantage of embodiments of the present invention that this allows the porous composite structure to be easily and economically replaced.

It is an advantage of embodiments of the present invention that the porous composite structure can be put to use in a variety of applications.

It is an advantage of embodiments of the present invention that two porous composite structures can be organized such that a structure is obtained having protrusions extending out on two opposing sides. Alternatively, such structures also can be positioned such that a structure is obtained having protrusions extending inwards, and are attached to e.g. a porous non-woven substrate, or to themselves without such non-woven.

In a first aspect, the present invention relates to a porous composite structure, comprising:
i. a porous substrate, furnished with protrusions on a first surface thereof and being free, e.g. totally free, of said protrusions on an opposing second surface thereof; and
ii. a polymer-based layer coating the first and the second surface and penetrating through pores of the porous substrate, in such a way that the pores of the porous substrate remain partially open and that the protrusions on the first surface extend out of the polymer-based layer.

In a second aspect, the present invention relates to a method for forming the porous composite structure as defined in any embodiment of the first aspect, comprising:
a. providing a porous substrate furnished with protrusions on a first surface thereof and being free of said protrusions on an opposing second surface thereof,
b. contacting a polymer-based mixture to the second surface of the porous substrate,
c. allowing the polymer-based mixture to penetrate through pores of the porous substrate and coat also the first surface, and
d. subsequently solidifying the polymer-based mixture, in such a way that the pores remain partially open.

In some embodiments, in the process, the polymer-based mixture thus is applied to one surface of the porous substrate only and the polymer-based mixture penetrates through pores of the porous substrate to reach the first surface of the porous substrate.

In a third aspect, the present invention relates to different uses of the porous composite structure as defined in any embodiment of the first aspect.

In a fourth aspect, the present invention relates to a product comprising the porous composite structure as defined in any embodiment of the first aspect.

In a fifth aspect, the present invention relates to a support having a face adapted to be engageable by touch fastening with protrusions of a porous composite structure as defined in any embodiment of the first aspect.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Fig. 1 shows a schematic representation of a porous structure according to an embodiment of the present invention.
Fig. 2 schematically shows a vertical cross-section of a porous substrate outfitted with different types of protrusions, in accordance with embodiments of the present invention.
Fig. 3A and FIG. 3B schematically show a vertical cross-section of two porous composite structures attached back-to-back (FIG. 3A) and arranged front-to-front (FIG. 3B), according to an embodiment of the fourth aspect.
Fig. 4 schematically depicts a roll-to-roll process for forming a porous composite structure according to the present invention.

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under, back and the like in the description and the claims are used for descriptive purposes and not necessarily for describing relative positions. It is to be understood that the terms so used are interchangeable with their antonyms under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Similarly, it is to be noticed that the term "coupled", also used in the claims, should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practised without these specific details. In other instances, well-known methods, structures and techniques have not been shown in detail in order not to obscure an understanding of this description.

The following terms are provided solely to aid in the understanding of the invention.

As used herein, and unless otherwise specified, a porous entity is an entity having pores (e.g. voids, channels or cavities) therein which allow fluids (e.g. liquids or gasses) to pass therethrough. In embodiments, the porosity of an entity may be quantified as either a two-dimensional porosity (2D) or a three-dimensional porosity (3D). A 2D porosity may be defined as the fraction of void area (e.g. the summed area of regions corresponding to voids) over the total area for a plane cross-section (e.g. a top or bottom surface) through the entity. The 2D porosity can for example be derived by analysing the void area in a visualization (e.g. a microscopy image, such as obtainable through a variety of known optical, electron or scanning probe microscopy techniques) of the plane cross-section (e.g. of the top or bottom surface). A 3D porosity may be defined as the fraction of void volume (e.g. the summed volume of regions corresponding to voids) over the total volume of the entity. A large variety of porosimetric techniques are known to determine the 3D porosity, including but not limited to techniques based on the direct measurement of void and/or non-void volume, optical methods, computed tomography methods, imbibition methods, water evaporation methods, fluid (e.g. mercury) intrusion methods, gas expansion methods, thermoporosimetry and cryoporometry. In embodiments, the void volume may be the total amount of void space or may be the amount of void space accessible from the surface (e.g. discounting closed-cell voids).

As used herein, and unless otherwise specified, a textile material is a material (e.g. a flexible material) comprising a network of fibres (e.g. natural or artificial fibres). In embodiments, the network of fibres may be formed by weaving, knitting, crocheting, knotting or felting.

In a first aspect, the present invention relates to a porous composite structure, comprising:
i. a porous substrate, furnished with protrusions on a first surface thereof and being free of said protrusions on an opposing second surface thereof; and
ii. a polymer-based layer coating the first and the second surface and penetrating through pores of the porous substrate, in such a way that the pores of the porous substrate remain partially open and that the protrusions on the first surface extend out of the polymer-based layer.

In embodiments, the porous substrate may have a porosity (i.e. the porosity before the polymer-based layer penetrates through pores of the porous substrate) of at least 10%, preferably at least 20%, yet more preferably at least 40%, most preferably at least 60%, such as 80% or more. In embodiments, the pores of the porous substrate may measure at least 500 nm, preferably at least 10 µm, yet more preferably at least 100 µm, most preferably at least 1 mm, such as from 5 mm or 1 cm. The pores of the porous substrate are preferably large enough to allow a polymer-based dope to penetrate therethrough (cf. embodiments of the second aspect) and to solidify into a good polymer-based layer while leaving the pores of the substrate partially open.

In embodiments, the porous composite structure may have a porosity (i.e. the porosity after the polymer-based layer penetrates through pores of the porous substrate) of at least 5%, preferably at least 20%, yet more preferably at least 40%, most preferably at least 60%, such as 80% or more. In embodiments, the porous composite structure (e.g. the porous substrate) may have a thickness of from 50 µm to 5 cm. In embodiments, the porous composite structure (e.g. the porous substrate) may have a width of at least 500 µm, preferably at least 1 cm, such as 1, 5 or 10 m. In embodiments, the porous composite structure (e.g. the porous substrate) may have a length of at least 500 µm, preferably at least 1 cm, such as 5, 10 or 100 m.

In embodiments, the porous substrate may be a flexible porous substrate. In embodiments, the porous composite structure may be a flexible porous composite structure. A flexible porous composite structure (and a flexible porous substrate) are advantageously easier to handle than rigid structures, for example facilitating replacement of the porous composite structure, storage and transport (e.g. by coiling up the porous composite structure into a roll), etc. The structure may also be flexible during production but rendered rigid, e.g. by engaging it to a rigid substrate, for use in certain applications.

In embodiments, the protrusions may be selected from pin structures (e.g. as present in a pile fabric), hook structures (e.g. as present in a hook fabric), loop structures (e.g. as present in loop fabric) and mushroom structures. Examples of such structures are for example described in WO2018/007338. In embodiments, selecting the protrusions may comprise selecting two or more from pin structures, hook structures, loop structures and mushroom structures. In embodiments, the protrusions may be monolithically connected with the porous substrate. In embodiments, the protrusions may have a height of at least 1 µm, preferably at least 10 µm, yet more preferably at least 100 µm, most preferably at least 1 mm, such as from 30 µm to 3 cm. In embodiments, the protrusions may have a density of from 1 to 500 per cm². In embodiments, the protrusions may be 3D printed structures. In some embodiments, the protrusions can be applied during the manufacturing process itself. In other embodiments, the protrusions can also be attached afterwards, e.g. by welding, etc.

In embodiments, the first surface may comprise a first area and a second area, the first area being furnished with the protrusions and the second area being free of said protrusions. The second area may for example correspond to one or more borders/edges of the first surface. Having the second area free of the protrusions can for example advantageously make it easier to secure the porous composite structure, e.g. by using glue on the second area or e.g. by ultrasonic or friction welding the second area to a support plate or to an edge of similar layer in order to form a pore free seal. In other examples, the first and the second area could form a check pattern.

In embodiments, the porous substrate and/or the protrusions may comprise (e.g. consist of) a material selected from a polymer, a natural material (e.g. leather), a metal, a glass, a carbon-based material (e.g. a carbon allotrope) and a basalt. In embodiments, the polymer may be selected from a polyethylene terephthalate (PET), polypropylene (PP), polyethylene (PE), polyamide (nylon), polychlorotrifluoroethylene (PCTFE), polyphenylene sulphide (PPS), polytetrafluoroethylene (PTFE, Teflon) or ethylene tetrafluoroethylene (ETFE). In embodiments, the metal may be selected from but not limited to Cu, Sn, Pt, Rh, Rh, Au, Ag, Zn, Cr, Fe, Ni and alloys thereof. In addition also all the binder polymers for the polymer-based layer can be used for manufacturing the porous substrate.

In embodiments, the porous substrate and/or the protrusions may be formed of a textile material. The textile material may for example comprise (e.g. consist of) one or more materials (e.g. fibres) selected from a polymer, a natural material (e.g. wool, flax, cotton, silk or hemp), a metal, a glass, a carbon-based material (e.g. a carbon nanotube) and a basalt as well as the metal filaments selected from Cu, Sn, Pt, Rh, Au, Ag, Zn, Cr, Fe, Ni, and alloys thereof. In embodiments, the textile material may be formed of a monofilament or of a multifilament fibre. In embodiments, the textile material may consist of a single material or may comprise fibres or filaments of different materials (e.g. natural fibre interwoven with a metal fibre). In embodiments, the fibres may have a diameter of from 3 µm to 5 mm. A textile material is advantageously typically a flexible material with a good control over its composition (e.g. through selecting one or more fibre-types in function of the application that is envisioned) and a good control over its porosity (e.g. through selecting an appropriate networking technique, such as weaving, and the parameters used therefor). In alternative embodiments, the porous substrate and/or the protrusions may be formed of a 'metaklett'-like material. In some embodiments this could be made based on polymer materials. Further examples of alternatives are studded pattern connection systems, as for example described in DE202011107861. It is to be noted that a vaste number of alternatives are available and that the invention is not limited to the particular examples shown.

In embodiments, the porous substrate and/or the protrusions may be coated with a further material. In embodiments, the further material may be a material for improving a physical, chemical, electrochemical and/or biological property, such as a conductivity (e.g. an electrical, ionic or thermal conductivity), a sorption property (e.g. an adsorption, absorption or desorption property), a hydrophobicity or -philicity, a chemical reactivity (e.g. a catalytic/electrocatlytic activity), or an antimicrobial (e.g. antibacterial, antiviral or antifungal) effect. For example, the porous substrate and/or the protrusions may consist of a polymer coated with a metal.

In embodiments, the porous composite structure may be electrically and/or ionically and/or thermally conductive. For example, the porous substrate may be electrically and/or ionically and/or thermally conductive (e.g. at least one electrically and/or ionically and/or thermally conductive path may run through the porous substrate) for use as an electrode or for a heating/cooling function. In embodiments, the protrusions may be electrically and/or ionically and/or thermally conductive. In embodiments, an uninterrupted electrically and/or ionically and/or thermally conductive path may run from at least one protrusion through the porous substrate. In this way, different functionalities for the porous composite structure are advantageously enabled. For example, the porous composite structure may be used as an electrode or the porous composite structure may be easily heated (e.g. facilitating desorption of adsorbed compounds). In embodiments, the porous composite structure (e.g. the porous substrate) may comprise one or more heating wires. In embodiments, the heating wire may be used as a fibre in a textile material. In embodiments, the heating wire may comprise NiCr, FeCrAI, CuNi, a ceramic material or a polymeric material.

In embodiments, the polymer-based layer may conformally coat or impregnate the second surface of the substrate and the pores therein. In embodiments, the second surface may be substantially flat (e.g. smooth; i.e. save for the pores therein and containing any protrusions). In embodiments, the polymer-based layer may substantially conformally coat the first surface. In embodiments, the polymer-based layer may have a thickness on the second surface of at least of at least 100 nm, preferably at least 1 µm, yet more preferably at least 10 µm, most preferably at least 100 µm, such as 1 mm or more. In embodiments, the polymer-based layer may have a thickness on the first surface of at least 100 nm, preferably at least 1 µm, yet more preferably at least 10 µm, most preferably at least 100 µm, such as 20, 30 or 200 µm. Advantageously an equal thickness of applied layer is obtained on top of the textile, not taken into account the protrusions. Although the polymer-based layer may typically be thinner over the first surface than over the second surface, it may preferably coat the first surface (without completely engulfing the protrusions), the second surface and also inside of the pores with a layer which is relatively uniform and substantially defect-free; this advantageously allows a good attachment of the polymer-based layer to the porous substrate and reduces the risk that the polymer-based layer would peel off. The polymer-based layer can advantageously protect the porous substrate and improve its lifetime. Furthermore, the polymer-based layer can advantageously be used to add to or tune properties or functionalities of the porous substrate (cf. infra). Such functionalities may be selected depending on the application.

In embodiments, the polymer-based layer may itself be porous; e.g. it may comprise pores (e.g. cavities or channels) exposing the porous substrate underneath. In these embodiments, the pores of the porous polymer-based layer may typically be smaller than the pores of the porous substrate. In embodiments, the pores of the porous polymer-based layer may measure from 0,1 nm to 10 µm, such as from 100 nm to 1 µm. In particular embodiments, the porous polymer-based layer may substantially fill the pores of the porous substrate and the pores of the porous substrate remaining partially open may be provided by pores (e.g. channels) in the porous polymer-based layer running across the filled pores of the porous substrate.

In embodiments, the polymer-based layer may comprise a polymer selected from a polysulfone (PSU), polyethersulfone (PESU), polyarylethersulfone, polyvinylidene fluoride (PVDF), polyvinylidene chloride (PVDC), polyvinyl chloride (PVC), chlorinated polyvinyl chloride (CPVC), polyaryletherketone (PAEK), polyether ether ketone (PEEK), sulfonated polyether ether ketone (PEEK-WC), polymonochlorotrifluoroethylene (PCTFE), polyetherimide (PEI), polyimide (PI), polyamide-imide (PAI), polyacrylonitrile (PAN), polycarbonate (PC), polymethyl methacrylate (PMMA), polyurethane (PUR), polyphenylene sulphide (PPS), cellulose acetate (CA), polystyrene (PS), polyvinyl alcohol (PVA), polyvinyl acetate (PVAc), a polyamide (e.g. nylon, such as nylon 6 or nylon 66). In some embodiments, such a second layer may be used as a surface coating of the first layer, thus inducing particular properties, such as for example applying PVP to a polysulfon basic layer to render the layer hydrophilic, or hydrophobic layer that forms integral part with underlying layer. In some embodiments, the polymer-based layer may comprise a single polymer selected from the aforementioned list. In other embodiments, the polymer-based layer may comprise two or more polymers selected from the aforementioned list. The polymer-based layer may for example comprise a copolymer (e.g. a graft copolymer, block copolymer or random copolymer), such as poly(vinylidene fluoride-co-hexafluoropropylene) (PVDF-HFP) or poly(vinylidene fluoride-co-chlorotrifluoroethylene) (PVDF-CTFE), or a blend of two or more polymers. In embodiments, the polymer-based layer may be selected to achieve a particular physical, chemical and/or biological particular functionality, such as a conductivity (e.g. an electrical, ionic or thermal conductivity), a sorption property (e.g. an adsorption, absorption or desorption property), a hydrophobicity or - philicity, a chemical reactivity (e.g. a catalytic/electrocatalytic activity), or an antimicrobial (e.g. antibacterial, antiviral or antifungal) effect. In some embodiments, the functionality of a gas diffusion electrode type of composite porous structure is provided for example for diffusion of gases to electro-catalytic sites. In some applications, the functionality may allow for keeping gases that have evolved at the anode side and the cathode side, separated. In another example, the functionality may be selected for allowing transport of water vapor and for restricting transport of liquid water, i.e. the functionality may provide membrane distillation (as for example can be used in EP13166435 B1).

In embodiments, the polymer-based layer may comprise one or more additives to form a solution, dispersion or suspension. In embodiments, the one or more additives may be organic or inorganic additives. In embodiments, the one or more additives may be selected from a polytetrafluoroethylene (PTFE, Teflon), hydroxypropyl cellulose (HPC), carboxymethylcellulose (CMC), polyvinylpyrrolidone (PVP), polyvinylpolypyrrolidone (PVPP), polyvinyl alcohol (PVA), polyvinyl acetate (PVAc), polyethylene oxide (PEO), polyethylene glycol (PEG), ethanolamine (MEA), diethanolamine (DEA), glycerol, glycol, inorganic oxide (e.g. TiO₂, HfO₂, Al₂O₃, ZrO₂, Y₂O₃, SiO₂, MgO), zeolite, Zr₃(PO₄)₄, BaSO₄, BaTiO₄, SiC, C, carbon nanotubes, Pt, Rh, Rh, Au, Zn, Cu, Sn, Fe, Raney Ni, Ni, Raney Ag, Ag, perovskite and metal-organic framework (MOF). It is to be noted that all these additives can be applied in a plurality of shapes, such as as a powder, as whiskers, as fibers, as chopped fibers, etc. In embodiments, the one or more additives may be functionalized, e.g. aminated, sulfonated, acrylated or functionalized with a quaternary ammonium group. In embodiments, the one or more additives may be selected to function as fillers, pore formers or catalysts.

In embodiments, the polymer-based layer may be further coated with an auxiliary layer, such as a thin auxiliary layer (e.g. 0.1 mm, 100 nm or less). The auxiliary layer may for example be used to improve or enable some useful function, such as a particular separation (e.g. the separation of ethanol from water).

In embodiments, any feature of the first aspect or its embodiments may independently be as correspondingly described for any other aspect and their embodiments.

In a second aspect, the present invention relates to a method for forming the porous composite structure as defined in any embodiment of the first aspect, comprising:
a. providing a porous substrate furnished with protrusions on a first surface thereof and being free of said protrusions on an opposing second surface thereof;
b. contacting, e.g. coating or impregnating, a polymer-based mixture to one surface, e.g. the second surface, of the porous substrate,
c. allowing the polymer-based mixture to penetrate through pores of the porous substrate; and
d. solidifying the polymer-based mixture, in such a way that the pores remain partially open.

In embodiments, after step c, the solidified polymer-based mixture (e.g. the polymer-based layer) may typically penetrate through the pores and coat both the first and second surface (cf. supra).

In embodiments, the polymer-based mixture may be referred to as a polymer-based dope. In embodiments, the polymer-based mixture may comprise one or more polymers (cf. supra) in a solvent. In embodiments, the polymer-based mixture may be a suspension of the one or more polymers in the solvent. The solvent may typically be any suitable solvent, selected in function of the nature of the polymer-based mixture and of the porous substrate. Such solvents are typically well-known in the art. In embodiments, the solvent may be an aprotic solvent.

In embodiments, step b may be performed with the porous substrate oriented vertically. In embodiments, the polymer-based mixture may be contacted by means of slot coating (e.g. using a single-side slot coater head, cf. example 4). The single-side slot coating typically is applied from the side comprising no protrusions (the second surface).

In embodiments, solidifying the polymer-based mixture in step c may be performed by phase inversion. In embodiments, phase inversion may also be referred to as phase separation. In embodiments, the phase inversion may be achieved by contacting the coated polymer-based mixture with a non-solvent (cf. example 4), by thermally induced phase separation (TIPS), or by any other known means of achieving phase inversion.

In embodiments, the method may be implemented as a roll-to-roll process. In embodiments, the roll-to-roll process may be a continuous or semi-continuous process. In embodiments, the roll-to-roll process may be implemented in such a way that, after step b and c, the just coated surface is minimally touched until the completion of step d. For example, the porous substrate may be guided over one or more rolls in such a way that only the protrusions make contact with said rolls prior to completion of step d (cf. example 4). This advantageously allows the layer of polymer-based mixture to be kept in a pristine state until solidification in step d is completed.

Methods according to the second aspect advantageously allow the porous substrate layer to be coated with a good (e.g. uniform and/or defect-free) polymer-based layer on both sides in a relatively straightforward way, at a high speed (e.g. at a speed of 5 to 30 m/min) and at a low cost. This is typically particularly so when the method is implemented as a roll-to-roll process. Furthermore, the method can typically advantageously be robust against variations in the thickness of the porous substrate layer; i.e. even if the thickness of the porous substrate is not perfectly uniform, a good polymer-based layer can nevertheless be coated thereon. In embodiments where a slot coating head is used, the second surface of the porous substrate is pulled close to the head, as this guarantees that at least at the second surface, the thickness of the layer is substantially uniform and is also smooth (i.e. without defects)

In embodiments, any feature of the second aspect or its embodiments may independently be as correspondingly described for any other aspect and their embodiments.

In a third aspect, the present invention relates to different uses of the porous composite structure as defined in any embodiment of the first aspect.

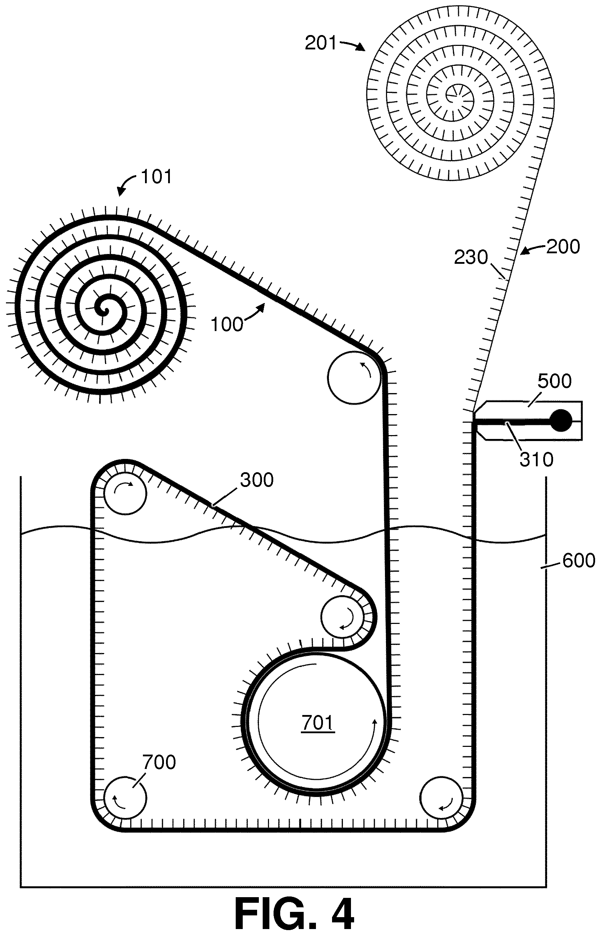

In embodiments, the use may be wherein the protrusions operate to form a porous spacer layer. In embodiments, the porous composite structure may be layered against another structure (e.g. a second porous composite structure) with the protrusions facing the other structure. Likewise, the porous composite structure may be coiled up into a roll. In such embodiments, the protrusions can function as a spacer maintaining a distance between the porous substrate and the further structure or between subsequent revolution of the porous substrate (the configuration looks like the configuration of coil 101 of FIG. 4).

In embodiments, the use may be wherein the protrusions operate as one face of a touch fastener (e.g. a hook-and-loop or hook-and-pile fastener). The porous composite structure may thereby for example be engageable by touch fastening with a support of the fifth aspect. In this way, a flexible porous composite structure can advantageously be made in a rigid version by engaging it with a rigid support. Furthermore, the porous composite structure being attachable and detachable by touch fastening advantageously allows it to be easily (re)placed, while allowing the support to remain. As such, for example in filtering applications, if the porous composite structure is damaged or contaminated (e.g. a layer of debris has built up on the porous composite structure over time, cf. supra), then it is straightforward to replace only the porous composite structure, without needing to replace the rest of assembly.

In embodiments, the use may be wherein the protrusions operate as flow-guides for a fluid (cf. infra). The flow guides may advantageously improve the flow of a fluid and/or improve the mass transport of compounds (e.g. reagents and products).

In embodiments, any feature of the third aspect or its embodiments may independently be as correspondingly described for any other aspect and their embodiments.

In a fourth aspect, the present invention relates to a product comprising the porous composite structure as defined in any embodiment of the first aspect.

In embodiments, the product may comprise a touch fastener, the touch fastener having a first face engageable with a second face, wherein the first face comprises the protrusions (cf. supra). In embodiments, the second face may comprise further protrusion which compatible (e.g. complementary) with the protrusions of the porous composite structure for forming a touch fastener. Examples of touch fasteners are hook and loop fasteners, or fasteners based on mushroom shaped protrusions used on both sides of the fastener, although embodiments are not limited thereto.

In embodiments, the product may be a permeable or semi-permeable membrane. The product may for example be a filtering membrane (e.g. for water filtration) or a membrane in a membrane bioreactor (MBR).

In embodiments, the product may be a separator (e.g. with an integrated spacer). The product may for example be a non-zero gap separator.

In embodiments, the product may be a contactor (e.g. a membrane contactor). The contactor may for example be for contacting a fluid (e.g. a gas or a liquid) in a distillation, or the contactor may be a contactor with sorption (e.g. adsorption or absorption) properties or with catalytic/electrocatalytic properties (e.g. for heterogeneous catalysis or for biocatalysis, or e.g. for electroconversion of CO2 to chemicals). The contactor with sorption properties may for example comprise protrusions comprising and coated with a sorption material (e.g. moisture or CO2 sorbents, such as zeolites or metal-organic-frameworks). The contactor with catalytic properties may for example comprise protrusions comprising or coated with a catalyst/electrocatalyst (e.g. metallic protrusions or protrusions coated with a catalyst/electrocatalyst).

In embodiments, the product may be a packing. The product may for example be a packing in a distillation column. In such a product, the porous composite structure may for example be in the form of small of pieces with small dimensions (e.g. having a width and length below 2 cm, preferably below 1 cm), e.g. obtained by cutting up or shredding a larger porous composite structure.

In embodiments, the product may be an electrode, such as a gas diffusion electrode. In these embodiments, the polymer-based layer may typically be hydrophobic and contain catalytic/electrocatalytic material such as for example (porous) metal particles, porous carbon, catalytic/electrocatalytic metal, etc. Alternatively or in addition thereto mixed hydrophilic and hydrophobic properties may be induced. Alternatively and/or in addition thereto, an an electrolyte may be applied. Alternatively and/or in addition thereto, an electric conductor is applied for manufacturing an electrode.

In embodiments, the product may be a heating element. The heating element may for example be used to heat a fluid (e.g. to increase a reaction rate of a chemical reaction, optionally a reaction catalyzed by the product), or to desorb a sorbed compound.

In embodiments, the product may be a flow-guide. The protrusions may for example guide the flow of a fluid (e.g. a gas or liquid). Depending on the application, the flow may be either perpendicular with respect to the first surface (e.g. through the porous substrate) or transverse thereto. For example, the porous composite structure may be layered or coiled and the fluid may be passed from one end of the porous composite structure to other. In such cases, apart from acting as a spacer, the protrusions can simultaneously function as a flow guide for the fluid and/or can perform another function (e.g. as a catalyst, as a filtration medium or as a sorption medium) with respect to the fluid.

In embodiments, the product may simultaneously have two or more of the functions described above. For example, the product may be a permeable membrane with touch fastening properties, the product may be a flow-guide contactor, the product may be a coiled backwashable filter membrane, etc.

In embodiments, the product may comprise two porous composite structures as defined in any embodiment of the first aspect, wherein the first porous composite structure is attached (e.g. back-to-back) to the second porous composite structure and wherein the second surface of the first porous composite structure faces the second surface of the second porous composite structure.

In embodiments, the polymer layer of the first porous composite structure may be joined (e.g. by means of phase inversion, cf. supra) to the polymer layer of the second porous composite structure. The resulting structure may be porous (e.g. pores in both porous composite structures may align) or may be non-porous (e.g. pores in one composite structure may be blocked off by pores in the other composite structure).

In embodiments, any feature of the fourth aspect or its embodiments may independently be as correspondingly described for any other aspect and their embodiments.

In a fifth aspect, the present invention relates to a support having a face adapted to be engageable by touch fastening with protrusions of a porous composite structure as defined in any embodiment of the first aspect.

In embodiments, the support may be a support for forming a filtering device(cf. supra). The filtering device may or example be made by connecting two structures with their protrusions to a suitable carrier. The structures thus are positioned back to back. The connection of the protrusions, e.g. via a hook and loop connection, advantageously is a very good connection, in order to withstand a positive/negative pressure of 1 to 3 bar of a fluid to be filtered.

In embodiments, any feature of the fifth aspect or its embodiments may independently be as correspondingly described for any other aspect and their embodiments.

In a sixth aspect, the present invention relates to a composite structure comprising two or more composite structures as described in any embodiment of the first aspect. The different composite structures may have different functionalities, (for example, one composite structure may be a membrane, a second composite structure may be an electrode.

The invention will now be described by a detailed description of several embodiments of the invention. It is clear that other embodiments of the invention can be configured according to the knowledge of the person skilled in the art without departing from the true technical teaching of the invention, the invention being limited only by the terms of the appended claims.

### Example 1: Porous textile substrates

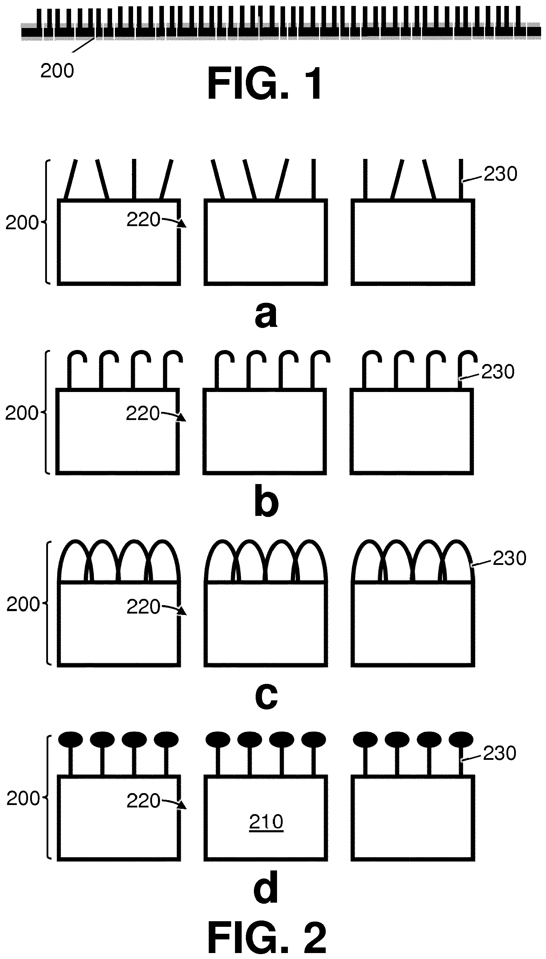

The first example relates to a textile material 200 composed of fibres. The textile material has pores and may be used as a porous substrate 200 in embodiments of the present invention. A schematic representation of a porous structure that can be formed with such a porous substrate 200 and with polymer-based layers at both sides (obtained by penetration of the polymer-based mixture through the porous substrate 200) is shown in FIG. 1.

### Example 2: Porous substrates with protrusions

Fig. 2 schematically shows a porous substrate 200 in accordance with the present invention, having pores 220 and outfitted with different types and combinations of protrusions 230: pin structures (Fig. 2a), hook structures (Fig. 2b), loop structures (Fig. 2c) and mushroom structures (Fig. 2d). The porous substrate 100 could for example be a textile material as shown in example 1.

Notwithstanding that the porous substrates 200 depicted in Fig. 2 are in each case outfitted with a single type of protrusions 230, the porous substrate 200 could equally be outfitted with a mix of two or more protrusions 230 (e.g. both piles and loops).

### Example 3: Product comprising two porous composite structures arranged back-to-back

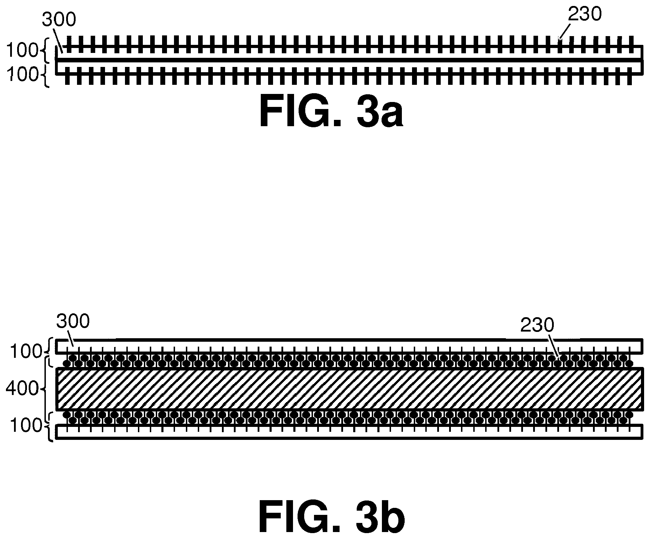

Figs. 3A and 3B schematically show two porous composite structures 100 attached back-to-back (FIG. 3A) and arranged front-to-front (FIG. 3B), according to an embodiment of the fourth aspect. The porous composite structure 100 comprises a porous substrate (not depicted) with a polymer-based layer 300 coating both its first and second side and further outfitted with protrusions 230 on the first side penetrating through the polymer-based layer 300. When arranged front-to-front, the structures can be attached to each other using direct attachment of the protrusions to each other, the structures can be attached to an intermediate layer by attachment of protrusions in the intermediate layer or by attachment of protrusions to protrusions provided on the intermediate layer (as shown in FIG. 3B). Such an intermediate layer may for example be a non-woven layer.

### Example 4: Forming a porous composite structure in a roll-to-roll process

We now refer to Fig. 4, schematically depicting a roll-to-roll process for forming a porous composite structure according to the present invention.

A roll 201 of the porous substrate 200 is initially provided. The porous substrate comprises pores (not depicted) and is outfitted protrusions 230 on a first side thereof.

The porous substrate 200 is guided vertically down along a slot coater head 500 (with horizontal extrusion orifice) which coats a layer of a polymer-based mixture 310 (e.g. a polymer dope) onto the second side of the porous substrate 200. It thereby is advantageous that the substrate is pulled close to the slot coater head, so that there is a good contact between the substrate and the coater head 500. The polymer-based mixture 310 not only coats the second side but also penetrates through the pores of the porous substrate to coat the first side of the porous substrate 200. Then there is a minimum time required to let the polymer-based mixture to flow together between the protrusions. The porous substrate 200 coated with the polymer-based mixture 310 at its both sides (through penetration from one side to the second side) is then guided through a non-solvent bath 600 in order to solidify the polymer-based mixture 310 into a polymer-based layer 300 and to obtain the porous composite structure 100. In doing so, the porous substrate 200 is guided over rolls of the type as shown by roll 700 in such a way that only the protrusions 230 (i.e. 1 side) contact the rolls 700 and hence form a spacer with respect to the polymer-based mixture 310 during the phase inversion process. In this way, the polymer-based mixture 310 only contacts the non-solvent while solidifying and can thus be kept in a pristine state. After enough solidification, polymer-based layer 300 is almost formed for 100% of its thickness such that pores run completely across it, opening up to both the first and second side; for example, subsequently, when the formed polymer-based layer is strong enough, the porous composite structure 100 can optionally be turned on a turn roll 701. Finally, the porous composite structure 100 is coiled on roll 101, facilitating further handling, posttreatments, storage and transport thereof.

It is to be understood that although preferred embodiments, specific constructions and configurations, as well as materials, have been discussed herein for devices according to the present invention, various changes or modifications in form and detail may be made without departing from the scope and technical teachings of this invention. For example, any formulas given above are merely representative of procedures that may be used. Functionality may be added or deleted from the block diagrams and operations may be interchanged among functional blocks. Steps may be added or deleted to methods described within the scope of the present invention.

## Claims

1. A porous composite structure (100), comprising:
i. a porous substrate (200), furnished with protrusions (230) on a first surface thereof and being free of said protrusions (230) on an opposing second surface thereof; and
ii. a polymer-based layer (300) coating the first and the second surface and penetrating through pores (220) of the porous substrate (200), in such a way that the pores (220) of the porous substrate (200) remain partially open and that the protrusions (230) on the first surface extend out of the polymer-based layer (300).

2. The porous composite structure (100) according to claim 1, the porous composite structure (100) having a porosity of at least 5%, for example at least 20%, for example at least 40%, for example at least 60%.

3. The porous composite structure according to any of the previous claims, wherein the protrusions (230) are selected from pin structures, hook structures, loop structures and mushroom structures or combinations thereof.

4. The porous composite structure (100) according to any of the previous claims, wherein the porous substrate (200) is a flexible porous substrate.

5. The porous composite structure (100) according to any of the previous claims, wherein the porous substrate (200) and/or the protrusions (230) are formed of a textile material.

6. The porous composite structure (100) according to any of the previous claims, wherein the protrusions (230) are monolithically connected with the porous substrate (200).

7. A method for forming the porous composite structure (100) as defined in any of the previous claims, comprising:
a. providing a porous substrate (200) furnished with protrusions (230) on a first surface thereof and being free of said protrusions (230) on an opposing second surface thereof;
b. contacting a polymer-based mixture (310) to the second surface of the porous substrate (200),
c. allowing the polymer-based mixture to penetrate through pores of the porous substrate (200) and coat also the first surface; and
d. solidifying the polymer-based mixture (310), in such a way that the pores (220) remain partially open by any type of phase inversion.

8. Use of the porous composite structure (100) as defined in any of claims 1 to 6, wherein the protrusions (230) operate to form a porous spacer layer.

9. Use of the porous composite structure (100) as defined in any of claims 1 to 6, wherein the protrusions (230) operate as one face of a touch fastener.

10. A product comprising the porous composite structure (100) as defined in any of claims 1 to 6.

11. The product according to claim 10, comprising a touch fastener, the touch fastener having a first face engageable with a second face, wherein the first face comprises the protrusions (230).

12. The product according to claim 10 or 11, comprising two porous composite structures (100) as defined in any of claims 1 to 6, wherein the first porous composite structure (100) is attached to the second porous composite structure (100) and wherein the second surface of the first porous composite structure (100) faces the second surface of the second porous composite structure (100).

13. The product according to claim 10 or 11, comprising two porous composite structures (100) as defined in any of claims 1 to 6, wherein the first porous composite structure (100) is attached to the second porous composite structure (100) and wherein the first surface of the first porous composite structure (100) faces the first surface of the second porous composite structure (100)

14. The product according to any of claims 10 to 13, being a filter wherein the porous composite structures are releasably connected.

15. A substrate having a face adapted to be engageable by touch fastening with protrusions (230) of a porous composite structure (100) as defined in any of claims 1 to 6.
